(19) Europäisches Patentamt / European Patent Office / Office européen des brevets

(11) **EP 1 600 022 B1**

(12) **EUROPEAN PATENT SPECIFICATION**

(45) Date of publication and mention
of the grant of the patent:
**05.06.2013 Bulletin 2013/23**

(21) Application number: **04715337.4**

(22) Date of filing: **27.02.2004**

(51) Int Cl.:
**H04W 72/04** *(2009.01)*      *H04W 28/06* *(2009.01)*

(86) International application number:
**PCT/EP2004/050221**

(87) International publication number:
**WO 2004/077859 (10.09.2004 Gazette 2004/37)**

(54) **Radio network controller and method for optimising decisions regarding operational states for an UMTS user equipment.**

Funknetzsteuerungseinheit und Vorrichtung zur Optimierung der Entscheidungen über Betriebsständen für einem UMTS-Teilnehmerendgerät

Rnc et procédé de röduction de la charge de signalisation dans un système de communication sans fil

(84) Designated Contracting States:
**AT BE BG CH CY CZ DE DK EE ES FI FR GR HU IE IT LI LU MC NL PT RO SE SI SK TR**

(30) Priority: **27.02.2003 GB 0304503**

(43) Date of publication of application:
**30.11.2005 Bulletin 2005/48**

(73) Proprietor: **Motorola Mobility LLC**
**Libertyville, IL 60048 (US)**

(72) Inventors:
• **RANDALL, Peter**
**Lechdale, Gloucestershire GL7 3FF (GB)**
• **SESMUN, Amardiya**
**Swindon,**
**Wiltshire SN5 8PH (GB)**

(74) Representative: **Jepsen, René Pihl et al**
**Eltima Consulting**
**Grove House, Lutyens Close'**
**Chineham Court**
**Basingstoke, Hants RG24 8AG (GB)**

(56) References cited:
**WO-A-00/76243**

• **"Universal Mobile Telecommunications System (UMTS); Radio Resource Control (RRC) protocol specification (3GPP TS 25.331 version 4.8.0 Release 4); ETSI TS 125 331" ETSI STANDARDS, EUROPEAN TELECOMMUNICATIONS STANDARDS INSTITUTE, SOPHIA-ANTIPO, FR, vol. 3-R2, no. V480, December 2002 (2002-12), XP014008816 ISSN: 0000-0001 cited in the application**

**Description**

**Field of the Invention**

This invention relates to reducing signalling load in a wireless communication system. The invention is applicable to, but not limited to, maintaining a different set of Radio Resource Control (RRC) sub-state switching algorithm parameters for each Quality of Service (QoS) class at a Radio Network controller (RNC) and engaging the appropriate set of parameters based on the service or QoS class of the service that a user is currently accessing.

**Background of the Invention**

Wireless communication systems, for example cellular telephony or private mobile radio communication systems, typically provide for radio telecommunication links to be arranged between a plurality of base transceiver stations and a plurality of subscriber units.

In a wireless communication system, each base transceiver station has associated with it a particular geographical coverage area (or cell). A particular communication range defines the coverage area where the base transceiver station can maintain acceptable communications with subscriber units operating within its serving cell. Often these cells combine to produce an extensive coverage area. The cells are typically geographically distinct with a coverage area that overlaps with neighbouring cells,

Wireless communication systems are distinguished over fixed communication systems, such as the public switched telephone network (PSTN), principally in that mobile stations move between coverage areas served by different BTS (and/or different service providers) and, in doing so, encounter varying radio propagation environments. Therefore, in a wireless communication system, subscriber units perform handover operations, when moving between different geographical areas/cells so that they can be supported in their communications by the nearest base transceiver station, which typically offers the highest quality signal/communication link

A fixed network interconnects all base transceiver stations. This fixed network comprises communication lines, switches, interfaces to other communication networks and various controllers required for operating the network. A call from a subscriber unit is routed through the fixed network to the destination node or communication unit specific for this call If the call is between two subscriber units of the same communication system the call will be routed through the fixed network to the base transceiver station of the cell in which the other subscriber unit is currently located. A connection is thus established between the two serving cells through the fixed network.

Alternatively, if the call is between a subscriber unit and a telephone connected to the Public Switched Telephone Network (PSTN) or a Packet Data Network (PDN), such as the Internet, the call is routed from the serving BTS to the interface between the cellular mobile communication system and the PSTN or PDN. It is then routed from the interface to the telephone by the PSTN or PDN.

The Universal Mobile Telecommunication System (UMTS) Standard has defined a Radio Resource Control (RRC) state transition model, for the assignment of air-interface bandwidth. The standardised RRC model is maintained at a subscriber unit, termed user equipment (UE) in UMTS parlance, and its Serving Radio Network Controller (SRNC). The RNC is responsible for initiating transitions between states of the model and is expected to manage these UE operational transitions based on the activity and mobility of the UE.

An example of a wireless communication network wherein a network element such as a radio network controller may release connections in the wireless communication network is provided in Patent Cooperation Treaty Patent Publication WO00/76243A.

The RRC model defines a number of states, with a variety of state transition opportunities to move between the various states. The states include four connected states (CELL_DCH, CELL_FACH, CELL_PCH and URA_PCH) as well as an idle state. In Cell_DCH (a dedicated channel in a cell), a large amount of radio resource is available and allocated for a user's use. In Cell_FACH (a fast access channel in a cell), the radio resource is shared with a number of other users. In Cell/URA_PCH (a packet data channel in a cell or in a UMTS radio access mode), the users are not allocated any radio resource per se. However, in this state, it is easy to move to one of the first two states to obtain radio resource. In an 'idle' state, the process to acquire radio resource is much more complicated, i.e. more involved signalling including slow security features are required.

With this in mind, the RNC controls the progress of the

UE through these various states based on particular vendor specific algorithms. The algorithms, and the selection of parameters, used to control the states and transitions between states are not standardised. However, within the UMTS standard, some transition algorithms are specified to use timers (as described in Technical Specification TS 25.331). Nevertheless, a a number of transition algorithms are undefined as to how they are to be implemented, such as: Cell_DCH to Cell_FACH, Cell_DCH to Cell_cPCH, Cell_DCH to Cell_uPCH, Cell_FACH to Cell_DCH, Cell_FACH to Cell_cPCH and Cell_FACH to Cell_uPCH.

All algorithms tend to be based around how busy a particular user is, i e. the busier the user, the more likely it is that the user should stay at their highest appropriate radio resource allocation. If a UE remains non-transmitting/ non-receiving for a long period of time, the network slowly moves the UE down the state chain Each activity will contribute to an algorithm.

In practice, in order to identify a period of time of a user's activity/inactivity in one or more of the states, timers are generally used Thus, when a pre-determined time period for any state has elapsed, a user may transition to another state under control of its SRNC.

To highlight a practical example of the above operation, let us consider the following. As is known, the RRC state model in the RNC is engaged whenever a user establishes a signalling connection to the RNC. The activity of the UE in the user plane dictates the transitions between the various states in the RRC model. A user actively transmitting user plane data is identified as operating in, for example, either a cell-FACH or a CellL-DCH state, depending on the type of radio bearers that have been established.

Let us assume, for example, that a user is in a Cell-FACH state. If the user remains inactive for a period of time that is long enough to cause the Cell-FACH timer to expire, the RNC signals the UE to move to a Cell-PCH state. If the period of inactivity is further extended, the UE may be subsequently instructed to a URA-PCH state and then ultimately to an RRC-Idle state, at which time the RRC connection is released.

When the UE resumes activity on the bearer plane, different signalling procedures are required depending on the 'sub-state' in which the UE is currently residing.

If the bearer activity is mobile-terminated, i.e another source initiates the connection; the UE has to be paged. The number of cells to which the paging messages are sent depends on the sub-state of the UE. Moreover, the number of mobility updates sent by the UE is also sub-state dependent.

Thus, the more inactive the UE, the more signalling is required to change a UE's state to an 'active' state As the UE moves from Cell-FACH down to RRC-Idle, the number of mobility updates is reduced whereas the paging load increases. Therefore, management of the transitions between RRC sub-states has a direct impact on management of the signalling load in the network.

The inventors of the present invention have recognised and appreciated that a known technique of solely using timers with a single fixed threshold in an RRC model to control the operation and allocation of radio resources using RRC states and transitions, is unnecessarily limiting and unrepresentative of the needs of users and the Operators. As the algorithm driving transitions between the sub-states is based on bearer activity (activity on the user plane), a single set of timer values cannot be optimal for all services. Thus, the known technique of defining a single set of timers and timer thresholds may provide optimal management of resources and signalling for one service, but will undoubtedly lead to less than optimal resources being provided to the user when accessing another service.

Thus, there exists a need in the field of the present invention to provide a communication system and a method for reducing signalling load by better management RRC states and transitions, wherein the aforementioned disadvantages may be alleviated.

**Statement of Invention**

In accordance with a first aspect of the present invention there is provided an infrastructure element, as claimed in Claim 1.

In accordance with a second aspect of the present invention, there is provided a communication system, as claimed in Claim 9.

In accordance with a third aspect of the present invention, there is provided a method of reducing signalling load in a wireless communication system, as claimed in Claim 11.

In accordance with a fourth aspect of the present invention there is provided a wireless communication unit, as claimed in Claim 13.

In accordance with a fifth aspect of the present invention there is provided a storage medium, as claimed in Claim 14.

In summary, the inventive concepts of the present invention alleviate the problems associated with prior art mechanisms by assigning a variety of different algorithm parameters, such as timing parameters, in the allocation of resources using the RRC model. In particular, the preferred embodiment of the present invention proposes to define and use optimal algorithm parameters or sets of parameters for each valid user service and/or Quality of Service (QoS). Furthermore, the inventive concepts of the present invention proposes transitioning between the states as the user's traffic profile changes, i.e. the user changes the service or quality of service that they are accessing.

Hence, by allocating resources in the RRC model, based on a traffic profile such as a service and/or quality of service, the consequent effects on the signaling levels can be controlled. In this manner, the inventors have proposed a mechanism to address the scenario where different QoS classes experience different traffic profiles, such as data packet activity, usage rates, etc.

**Brief Description of the Drawings**

Exemplary embodiments of the present invention will now be described, with reference to the accompanying drawings, in which:

FIG. 1 shows a block diagram of a (UMTS) cellular radio communications system adapted to support the various inventive concepts of an embodiment of the present invention

FIG 2 shows a state transition diagram adapted tp support the various inventive concepts of an embodiment of the present invention; and

FIG 3 illustrates a flowchart for reducing signalling load in a wireless communication system, in accordance with embodiments of the present invention

**Description of Preferred Embodiments**

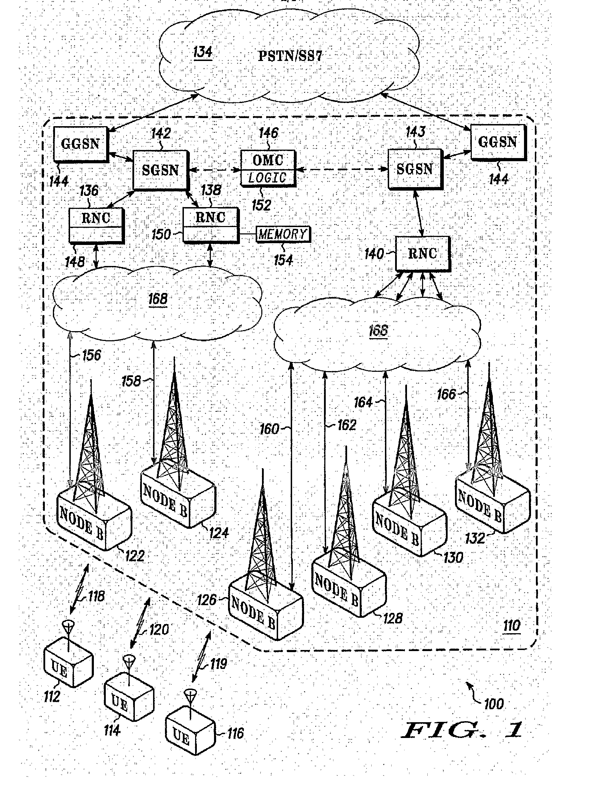

Referring now to FIG 1, a cellular-based communication system 100 is shown in outline, in accordance with an embodiment of the invention. In the embodiment of the invention, the cellular-based communication system 100 is compliant with, and contains network elements capable of operating over, a UMTS air-interface. In particular, the invention relates to the Third Generation Partnership Project (3GPP) specification for wide-band code-division multiple access (WCDMA) standard relating to the UTRAN radio Interface (described in the 3G TS 25.xxx series of specifications) and is described with reference to such a communication system However, it will be apparent to a skilled person that the present invention is not limited to a UMTS communication system.

A plurality of subscriber terminals (or user equipment (UE) in UMTS nomenclature) 112, 114, 116 communicate over radio links 118, 119, 120 with a plurality of base transceiver stations, referred to under UMTS terminology as Node-Bs, 122, 124, 126, 128, 130, 132. The system comprises many other UEs and Node Bs, which for clarity purposes are not shown

The wireless communication system, sometimes referred to as a Network Operator's Network Domain, is connected to an external network 134, for example the Internet. The Network Operator's Network Domain includes:

(i) A core network, namely at least one Gateway General packet radio system (GPRS) Support Node (GGSN) 144 and/or at least one Serving GPRS Support Node (SGSN); and
(ii) An access network, namely one or more UMTS Radio network Controllers (RNC) 136-140 and a number of associated UMTS Node Bs 122-132.

The GGSN 144, 145 and SGSN 142, 143 are responsible for GPRS or UMTS interfacing with a Packet Data Network (PDN) such as the Internet 134 or a Public Switched Telephone Network (PSTN) 134. A SGSN 142, 143 performs a routing and tunnelling function for traffic within say, a GPRS core network, whilst a GGSN 144, 145 links to external packet networks, in this case ones accessing the GPRS mode of the system.

The Node-Bs 122-132 are connected to these external networks, through base station controllers, referred to under UMTS terminology as Radio Network Controllers stations (RNC), including the RNCs 136, 138, 140 (with only three RNC being shown for clarity purposes only), and SGSN 142, 143 (with two SGSN being shown for clarity purposes only).

Each Node-B 122-132 contains one or more transceiver units and communicates with the rest of the cell-based system infrastructure via an $I_{ub}$ interface, as defined in the UMTS specification.

Each RNC 136-140 may control radio resources for one or more Node-Bs 122-132. The Operations and Management Centre (OMC) 146 is operably connected to RNCs 136-140 and Node-Bs 122-132 The OMC 146 administers and manages sections of the cellular telephone communication system 100, as is understood by those skilled in the art.

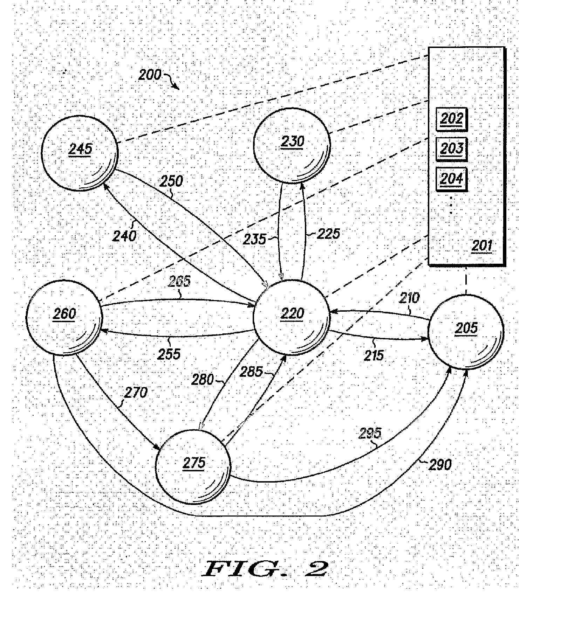

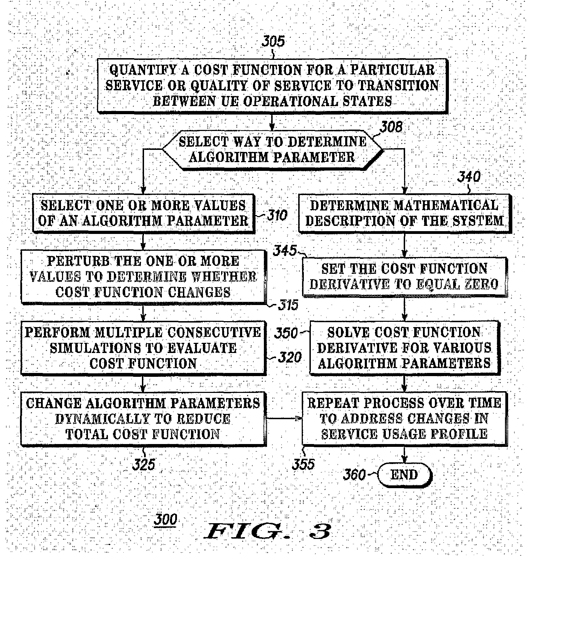

In accordance with an embodiment of the invention, one or more RNCs 136-140 has been adapted, to offer, and provide for, improved radio resource control (RRC) of a plurality of UEs. The adapted operation and inter-working of the RNC is preferably implemented in software, for example in a digital signal processor 148, 150 contained in the RNC, but may alternatively be implemented using an additional processor or other means as will be apparent to a skilled person, and all such variations are intended to be included in the present invention. The adapted RNC, say RHC 136, is further described with respect to FIG. 2 and FIG. 3.

The RNC has been adapted to maintain a set of algorithm parameter values, such as timer thresholds, for each QoS class or service accessed by a UE user. In this regard, when the radio resources, termed radio bearers (RABs) and RRC connections are first established (or renegotiated), the QoS class in the establishment message(s) preferably dictates those timer threshold values to use at the RNC to drive the transitions between RRC states. By selecting various timer threshold values according to the UE traffic profile for each QoS class (or service), optimal timer threshold values can be selected This provides a suitable trade-off between mobility-related and bearer-related signalling traffic.

Although the preferred embodiment of the present invention is described with reference to an RNC providing radio resource control based on a set of timers and/or timer thresholds associated with varying QoS or classes of services, it is envisaged that the inventive concepts herein described can be applied to any RRC algorithm parameter. Hence, the inventive concepts are not considered as being limited to timers and/or timer thresholds, but by the appended claims.

It is also within the contemplation of the invention that alternative radio or cellular communication architectures, such as private or public mobile radio communication systems or other wireless communication systems could benefit from the inventive concepts described herein.

More generally, the dynamic adaptation of RNC 136, re-programmed according to the preferred embodiment of the present invention, may be implemented in any suitable manner For example, new apparatus may be added to a conventional RNC, or alternatively existing parts of a conventional RNC may be adapted, for example by re-programming one or more processors therein. As such the required adaptation may be implemented in the form of processor-implementable instructions stored on a storage medium, such as a floppy disk, hard disk, programmable read only memory (PROM), random access memory (RAM) or any combination of these or other storage media.

A UE has two state properties - an RRC state and a packet mobility management (PMM) state. The RRC state is stored at both the UE 112 and the RNC 136. The PMM state is known at the SGSN 142 and UE 112, Hence, the interaction between these states dictates a granularity of knowledge of the location of the UE 112 by both the RNC 136 and SGSN 142. To switch between states (either PMM and/or RRC), various signalling flows are required. For example, the signalling flows may be dependent upon one or more of the following:

  (i) On user activity;
  (ii) On user mobility; and
  (iii) On timer or timer threshold values.

Referring now to FIG. 2, an RRC state model 200 in the RNC is shown. Initially, before a UE is switched on, the UE is in an RRC-Idle/PMM detached state 205 In this combination of states, the network does not know anything about the location of the UE. To move from this state combination, the UE must perform a PS Attach procedure 210, i.e. switching on and connecting to the network. This procedure establishes, an RRC connection to the RNC, and an Iu signalling connection to the SGSN. At the end of this procedure, the UE is placed in a Cell-FACH RRC state/PMM-connected state 220. In this state combination, the location of the UE is known at the cell level.

When a UE then moves cells, a cell update procedure is required, which informs the RNC of the cell the UE is now located in. The SGSN is not informed of this change, as it only needs to know which RNC the UE is to. If the Serving RNC (SRNC) of the UE changes, then an SRNC relocation procedure is required, which informs the SGSN of the new SRNC's identity,

In accordance with the preferred embodiment of the present invention, once a UE attaches to an SGSN after first establishing a signalling connection to the RNC, a plurality of timers and associated timer threshold levels 201 are activated. The plurality of timers and associated timer thresholds 201 determine subsequent state changes for the duration of the attach period. Notably, the respective timer threshold values are variable, with the levels based on a UE's service or quality of service, as known by its SRNC.

This is also the case after a UE has activated a packet data protocol (PDP) context. When a mobile activates a PDP context, the QoS class of the service is used to dictate whether the bearers are set up on a random access channel (RACH)/FACH (moving the UE to CELL FACH) or DCH (moving the UE to CELL_DCH). Subsequently, the activity of the user determines the RRC state of the user.

A transport channel switching algorithm is used to determine the parameters used in switching between Cell_FACH and Cell_DCH, for example, dependent upon the transport channel a UE is operating on and in response to the nature of the traffic on that channel. The known switching algorithm monitors a UE's continuing activity of use of a DCH channel to maximise its efficiency A DCH is suited to continuous use, for example, video/audio and other data streaming, high bandwidth services that require a small delay In contrast, a FACH is more suited to bursty packet based services, as it is a shared resource, i.e. many users using this one channel with bursty traffic makes it appear a continuously used channel.

If the UE is in a Cell-FACH state, a first timer T_Cell_FACH - is configured to expire after a first period of time (exceeding a first timer threshold 202) 225. If the UE has been inactive for this period, it is then moved into Cell-PCH state 230. While the UE is in a Cell-PCH state 230, it performs a Cell Update procedure 235 every time it crosses a cell boundary. If there is any incoming traffic from the network, it is paged only in one cell, as the UE is known to be in that cell.

In accordance with the preferred embodiment of the present invention, when in the Cell-PCH state 230, a second timer T_Cell_PCH is running. Once the second timer expires 240 by exceeding a respective second time threshold 203, the next mobility flow that the UE executes, i.e. a cell update 235, places the UE in a UMTS Radio Access Network (UTRAN) Registration Area (URA)-PCH RRC state 245 A URA is a collection of cells, which may Overlap with neighbouring URAs. In a URA-PCH state 245, a location of the UE is identified by the identity of the URA containing the UE. The mobility procedure URA Update is performed when the UE changes its URA identity. Before the UE is able to receive traffic, it must first be paged in each cell within that URA. Once the UE's cell has been identified, the connection can be established and the traffic delivered.

In URA-PCH state 245, a third timer T_URA_PCH is running. Once the third timer expires 250 by exceeding a third timer threshold 204, the UE must release all resources and move to an RRC-Idle/PMM-Idle state 275 The transition to an RRC-Idle/PMM-Idle state 275 is performed by the RNC, which initiates a RRC Connection Release and Iu Signalling Release operation 280.

When these transitions are complete, the location of the UE is known by the Routeing Area identity. A routeing area consists of a number of cells and typically covers a number of URAs. In this state, the UE is relatively inactive and only performs a mobility (Routing Area) update when it crosses routing area boundaries. However, incoming traffic from the network now requires that the UE is paged in every cell within the routing area

In this instance, setting incorrect algorithm parameter values (such as timer thresholds) for a particular service would have a major impact on the air interface throughput, as UEs in a Cell_DCH state 260 occupy much more resource than those in a Cell FACH state 220. However, transitioning a UE between a Cell_DCH state 260 and a Cell_FACH state 220, thereby lowering its activity status at its SRNC, incurs a signalling overhead.

Timer and timer threshold values also dictate other RRC state transitions. The main timer-initiated state transitions are:

(i) Cell_FACH to Cell_PCH 225;
(ii) Cell_PCH to URA_PCH 235, 240; and
(iii) URA_PCH to RRC_Idle 245, 275.

The duration spent by a UE in each of these states is essentially (in an over-simplistic view) dictated by the time between sending packets.

Hence, the duration spent in each state has a large effect on the levels of mobility and paging signalling in the network. This can be explained by the following. If a UE is in idle mode, the UE performs the least number of mobility flows. However, because of this, the network fails to have a good indication of the location of the UE. Consequently, the network needs to page a large number of cells to try and locate the UE, when a call for that UE is received. Conversely, if a UE is in any of the Cell_xxx states, the network knows precisely the location of the UE due to many more mobility signalling flows as the UE moves within the network. Hence, there is no need to page a number of cells when receiving a call for the UE.

In summary, in Cell_FACH and Cell_PCH states, the network knows the location of the UE at the cell level. In a URA_PCH state, the location of the UE is known at the URA level, and when the UE is in an idle state the location of the UE is known at the routing area level. In this respect, the further the UE is towards operating in an idle state, the less mobility signalling is performed The inventors of the present invention therefore propose shorter timer thresholds to minimise the signalling traffic for mobility.

On the other hand, if the UE receives subsequent traffic when not in a Cell_FACH or a Cell_DCH state, the UE must first be paged. The UE is paged at a granularity that its location is known at, as indicated above. Thus, a UE in an idle state is paged in more cells than a UE in a URA_PCH state, which would, in turn, also be paged in more cells than a UE in Cell_PCH state In this respect, the inventors of the present invention propose to use longer timer threshold values in order to minimise paging traffic levels. Also, if the mobile is in an idle state, RRC and Iu signalling connections have to first be restored, incurring extra signalling traffic and delays in setting up the required bearers

It is known in the UMTS arena that each service has a specific traffic model, which determines the length of periods of activity and inactivity. Services in UMTS are already grouped according to their QoS class. Therefore, in the preferred embodiment of the present invention, a set of timer threshold values is allocated for each UMTS QoS class group

The example below illustrates the difference, and thereafter a preferred implementation, between two services belonging to two different QoS classes.

Let us consider two services such as email and Web access/downloads. An email service belongs to a 'background' QoS class, whereas a Web service belongs to the 'interactive' QoS class. A typical email download of about one Kbyte in size is expected to last for about five seconds. Therefore, it is proposed that in the case of services such as email, timer threshold values are set to be relatively short, in order to allow resources to be released as soon as the download is complete.

Similarly, for example, a short message service (SMS) session with one message may be of the order of one hundred bytes long with a mean inter-session time of say, sixteen hours SMS would typically be described as long periods of inactivity between short "conversations" where the active periods are of the order of single packet up/downloads. In a similar manner to an email service, it is proposed that timer threshold values are set to be relatively short, in order to swiftly move the UE into an idle state, thereby freeing up resources in the network.

With a user activity/traffic profile that entails a significant amount of web browsing, a different timer threshold should be used. In web browsing, a short packet is sent to the network from the UE (e.g. a HTTP: 'Get' request), In response to the UE's request, a relatively large amount of data is sent to the UE. A period of siience (i.e. user 'read' time) would follow at both ends of the link, before the UE would send a further 'Get' request. A web session may consist of a download of several files of, say, fifteen Kbytes each, separated by a reading time of about one minute, i.e. an average of five web pages are read. Web sessions, for example, may have a mean inter-session time of approximately two and a half hours, with a mean session length up to, say, five minutes.

Therefore, in contrast to SMS or email type services, it is proposed that in the case of services such as a web service, timer threshold values are set to be relatively long. In this manner, a longer timer threshold reduces the possibility of a timer expiring during a web-reading time, thereby avoiding the necessity to re-establish resources every time a new web page is to be downloaded.

This would be in contrast to a third user activity profile entailing a significant level of accessing Streaming services. This profile would be described by long periods of a user downloading and/or uploading large amounts of data. Hence, algorithm parameter thresholds that are identified as being suitable for one service may be deemed unsuitable for others within timer function 201.

It is envisaged that any other QoS classes or services may be used to influence the timer threshold values in an RNC's RRC model In this context, the QoS classes may include, but are not limited to: Background, Conversational, Streaming, and Interactive. Furthermore, each UMTS UE is mapped into a QoS class depending upon the bit-rate required and the delay requirements. Therefore, the preferred embodiment of the present invention, as illustrated in FIG. 2, comprises multiple sets of timers and respective threshold values, dependent upon the respective QoS classes and or services of the traffic.

The RNC is configured to trigger the correct set of timer threshold values dependant upon the QoS class of the service that a user is accessing, Preferably, in a UMTS context, the RNC uses the establishment cause of the RRC connection set up mechanism to determine which set of timer threshold values to use for a given service.

In an alternative embodiment, the RNC uses radio bearer (RAB) parameters provided in a RANAP RAB Assignment Request to determine those set of timer threshold values to use for a given service. The radio access network access protocol (RANAP) is the controlling protocol between the core network (SGSN and MSC) and the RNC. When a radio access bearer (RAB) is set up via RANAP (and UTRAN signalling) connection, a UE obtains both radio resource and core network resource. Notably, the RNC knows a UE's QoS class, but not necessarily the service accessed by the UE. Therefore, it is also proposed that the respective traffic models are also evaluated for the services within a QoS class.

Referring now to FIG. 3, a flowchart 300 indicating a preferred timer threshold optimisation mechanism is illustrated. The process commences in step 305 where a 'cost' function for a particular service or QoS is quantified for a particular algorithm parameter value (such as a timer threshold). Once the cost function is quantified in step 305, the preferred process follows one of two routes to identify optimum values to be used, as illustrated in step 308. Whichever route is selected the process is applied to each QoS class to obtain the best possible algorithm parameter (timer threshold) values for each QoS class. A skilled artisan would recognise that alternative routes could be used for the UMTS and other communication systems.

A first route starts at any one or more arbitrary, but reasonable, value(s) of the algorithm parameter as shown in step 310. The first route then perturbs these one or more values gradually, in step 315, to determine whether the overall cost function changes. It is proposed that the first route is typically applied when the underlying system is difficult to define in mathematical terms, i.e. it would fall into a 'Numerical Techniques for optimisation' category.

This first method requires running multiple consecutive stimulations to evaluate the cost function associated with particular algorithm parameters, such as timer threshold values, as shown in step 320 These algorithm parameter values are then changed dynamically and in an intelligent manner to gradually reduce the total Cost function in step 325.

A second route may be used it a compete mathematical description of the system is, or can be generated, and is readily manipulated, in step 340. In this regard, a cost function may be defined in terms of the parameters of the system. The cost function equation derivative is then set equal to zero, as shown in step 345 The cost function equation derivative is solved for the various algorithm parameter values (such as timer threshold values) to yield a set of optimum values, as shown in step 350. This second route may be referred to as the 'Analytical Solution', as it requires an extensive use of algebra and statistics, and may result in multiple possible solutions.

Also, for either route, the process is repeated over time in step 355, to address changes in the UE's service usage profile charges over time. For example, it is known that the usage of a mobile telephone and its features by a user increases as it becomes a more essential part of the user's everyday life. with this in mind, a periodic, intermittent or continuous re-evaluation of the parameter values is implemented.

It is envisaged that a suitably cost function could he of the form.

$$J = k_1(s_p q_p)^2 + k_2(s_m q_m)^2 + k_3(d_a q_a)^2 \qquad [1]$$

Where:

$J$ is the overall cost value;
$K_1$, $k_2$, $k_3$ are user definable constants;
$S_p$ is the typical paging message size;
$Q_p$ is the quantity of paging messages transmitted;
$S_m$ is the typical size of mobility messages;
$Q_m$ is the quantity of mobility messages transmitted;
$D_a$ is the typical delay due to activity in the incorrect state, and
$Q_a$ is the quantity of these occurrences.

Notably, each of the terms in the cost function is a squared value to ease the differentiation calculation, as well as guaranteeing a positive cost function. If the cost function is quadratic in nature, then any stationary points on the curve are at least local minima identifying optimal values.

The complexity involved in defining the variables in the cost function is, in the preferred embodiment, dependent upon the timer threshold values and the UE traffic profile. For a full analytical solution to be performed, the different services in a QoS class should be profiled as statistical, distributions and combined into the cost function Solutions would then also be dependent upon the tolerances one wishes to place on the solution.

Although the above scenarios are all described with reference to management of transitions between the RRC states in the RRC state model, it is within the contemplation of the invention that the inventive concepts can be applied to any state-based model of a communication unit's operation. Furthermore, although the inventive concepts have been described with reference to an RNC in a UMTS system, it is within the contemplation of the invention that the inventive concepts can be applied to any suitable element/function in any type of communication system.

It will be understood that the communication system, communication unit, and method for reducing signalling load in a wireless communication system described above tends to provide at least one or more of the following advantages:

(i) A more efficient management of resources and signalling load, This results from transitions in the RRC state model being based on the QoS class of the service that the UE is using.
(ii) An improvement in signalling load results from reduced signalling procedures required for mobility management, session management and RRC connection management.
(iii) It also potentially improves the end user experience, as less time may be spent establishing radio resource due to efficiency gains in accessing services.

Whilst specific, and preferred, implementations of the present invention are described above, the scope of the invention is defined by the appended claims.

Thus, a communication system, and a method for reducing signalling load have been provided wherein the aforementioned disadvantages associated with prior art arrangements have been substantially alleviated.

**Claims**

1. An infrastructure element in a universal mobile telecommunication system (UMTS) wireless communication system (100, 200) that allocates wireless communication resources to one of a plurality of wireless communication units (112-116) dependent upon an operational state of said wireless communication unit, the infrastructure element comprising:

means for employing a radio resource control state model to determine at least one transition of a wireless communication unit between a plurality of operational states; and
means for transitioning said wireless communication unit between the plurality of operational states based on a variable timer threshold;
the infrastructure element being **characterised in that**:

said means for transitioning said wireless communication unit between the plurality of operational states is configured to define one timer threshold for each combination of a Quality of Service class, the service within the Quality of Service class accessed by said wireless communication unit and an indication of a location of said wireless communication unit.

2. The infrastructure element according to Claim 1, wherein said infrastructure element is a radio network controller (136, 138, 140).

3. The infrastructure element according to Claim 1, wherein said transition(s) between said plurality of operational states is based on one of a set of algorithm parameters, such that a different set of algorithm parameters is used for each respective quality of service class and service therein.

4. The infrastructure element according to Claim 3, wherein said algorithm parameters include at least one of the group of user activity, user mobility, and a traffic profile.

5. The infrastructure element according to Claim 1, wherein said transition(s) between said plurality of operational states is based on one of a set of variable timers, such that a different timer is used for each respective quality of service class and service therein.

6. The infrastructure element according to Claim 5, wherein said set of timers comprises a set of variable timer thresholds for each respective quality of service class and service therein such that a different timer threshold is used for each respective quality of service class and service therein.

7. The infrastructure element according to Claim 6, wherein timer threshold levels are based on a length of time a wireless communication unit accesses a service in a quality of service class.

8. The infrastructure element according to Claim 2, wherein said radio network controller (136, 138, 140) uses one of the group of said radio resource control set up mechanism and radio access bearer parameters in a RANAP radio access bearer assignment request to determine which service is used by the wireless communication unit.

9. A communication system comprising an infrastructure element (136) as claimed in any of preceding Claims 1 to 8.

10. The infrastructure element of Claim 9, wherein the infrastructure element is a radio network controller (136, 138, 140).

11. A method of reducing signalling load in a wireless communication system (300) comprising an infrastructure element that allocates wireless resources to one of said plurality of wireless communication units (112-116) dependent upon an operational state of a wireless communication unit, the method comprising the steps of:

quantifying (305) a cost function for a particular service of a quality of service class accessed by said wireless communication unit in order to transition between wireless communication unit operational states;
evaluating (320, 350) a cost function derivative to identify an algorithm parameter, wherein said cost function is dependent upon a variable timer threshold ; and
transitioning said wireless communication unit between a plurality of operational states based on said evaluation; the method being **characterised in that** the step of evaluating a cost function comprises defining one timer threshold for each combination of a Quality of Service class, the service within the Quality of Service class accessed by said wireless communication unit and an indication of a location of said wireless communication unit.

12. The method of reducing signalling load in a wireless communication system (300) according to Claim 11, wherein said step of evaluating comprises evaluating one of a set of algorithm parameters, such that a different set of algorithm parameters is used for each respective service in a Quality of Service class.

13. A communication unit adapted to perform the method steps of Claim 11 or Claim 12.

14. A storage medium storing processor-implementable instructions for controlling a processor to carry out the method steps of Claim 11.

**Patentansprüche**

1. Infrastrukturelement in einem UMTS-Drahtloskommunikationssystem (100, 200) (UMTS = Universal Mobile Telecommunications System), welches einer unter mehreren Drahtloskommunikationseinheiten (112 - 116) Drahtloskommunikationsresourcen in Abhängigkeit von einem Betriebszustand der Drahtloskommunikationseinheit zuteilt, wobei das Infrastrukturelement aufweist:

   Mittel zum Verwenden eines Funkressourcensteuerungszustandsmodells, um wenigstens einen Übergang einer Drahtloskommunikationseinheit zwischen mehreren Betriebszuständen zu bestimmen; und
   Mittel zum Bewirken von Übergängen der Drahtloskommunikationseinheit zwischen den mehreren Betriebszuständen auf der Grundlage eines variablen Zeitgeberschwellwerts;
   wobei das Infrastrukturelement **dadurch gekennzeichnet ist, dass**:

   die Mittel zum Bewirken von Übergängen der Drahtloskommunikationseinheit zwischen den mehreren Betriebszuständen derart konfiguriert sind, dass sie für jede Kombination einer Dienstgüteklasse, des von der Drahtloskommunikationseinheit innerhalb der Dienstgüteklasse beanspruchten Dienstes und einer Angabe eines Ortes der Drahtloskommunikationseinheit einen Zeitgeberschwellwert definieren.

2. Infrastrukturelement nach Anspruch 1, wobei das Infrastrukturelement ein Radio Network Controller (136, 138, 140) ist.

3. Instrastrukturelement nach Anspruch 1, wobei der Übergang oder die Übergänge zwischen den mehreren Betriebszuständen auf einem Algorithmusparameter aus einem Satz von Algorithmusparametern beruht, so dass für jede betreffende Dienstgüteklasse und dem Dienst darin ein anderer Satz von Algorithmusparametern verwendet wird.

4. Infrastrukturelement nach Anspruch 3, wobei die Algorithmusparameter wenigstens ein Element aus der folgenden Gruppe enthalten: Nutzeraktivität, Nutzermobilität und ein Datenverkehrsprofil.

5. Infrastrukturelement nach Anspruch 1, wobei der Übergang oder die Übergänge zwischen den mehreren Betriebszuständen auf einem variablen Zeitgeber aus einem Satz variabler Zeitgeber beruht, so dass für jede betreffende Dienstgüteklasse und den Dienst darin ein anderer Zeitgeber verwendet wird.

6. Infrastrukturelement nach Anspruch 5, wobei der Satz von Zeitgebern einen Satz variabler Zeitgeberschwellwerte für jede betreffende Dienstgüteklasse und den Dienst darin enthält, so dass für jede betreffende Dienstgüteklasse und den Dienst darin ein anderer Zeitgeberschwellwert verwendet wird.

7. Infrastrukturelement nach Anspruch 6, wobei Zeitgeberschwellwertniveaus auf der Länge der Zeit beruhen, in der eine Drahtloskommunikationseinheit einen Dienst in einer Dienstgüteklasse in Anspruch nimmt.

8. Infrastrukturelement nach Anspruch 2, wobei der Radio Network Controller (136, 138, 140) ein Element aus der folgenden Gruppe verwendet: den Funkressourcensteuerungseinrichtungsmechanismus und Radio-Access-Bearer-Parameter in einer RANAP-Radio-Access-Bearer-Zuweisungsanforderung, um zu bestimmen, welcher Dienst von der Drahtloskommunikationseinheit verwendet wird.

9. Kommunikationssystem mit einem Infrastrukturelement (136) nach einem der vorangehenden Ansprüche 1 bis 8.

10. Infrastrukturelement nach Anspruch 9, wobei das Infrastrukturelement ein Radio Network Controller (136, 138, 140) ist.

11. Verfahren zum Reduzieren einer Signalisierungslast in einem Drahtloskommunikationssystem (300) mit einem Infrastrukturelement, welches einer der mehreren Drahtloskommunikationseinheiten (112 - 116) in Abhängigkeit von einem Betriebszustand einer Drahtloskommunikationseinheit Drahtlosressourcen zuteilt, wobei das Verfahren die folgenden Schritte aufweist:

   Quantifizieren (305) einer Kostenfunktion für einen bestimmten Dienst einer Dienstgüteklasse, die von der Drahtloskommunikationseinheit in Anspruch genommen wird, um zwischen Drahtloskommunikationseinheitsbetriebszuständen zu wechseln;
   Auswerten (320, 350) einer Kostenfunktionsableitung, um einen Algorithmusparameter zu identifizieren, wobei die Kostenfunktion von einem variablen Zeitgeberschwellwert abhängt; und

Bewirken von Übergängen der Drahtloskommunikationseinheit zwischen mehreren Betriebszuständen auf der Grundlage der Auswertung;

wobei das Verfahren **dadurch gekennzeichnet ist, dass** der Schritt des Auswertens einer Kostenfunktion beinhaltet, dass für jede Kombination einer Dienstgüteklasse, des Dienstes innerhalb der von der Drahtloskommunikationseinheit beanspruchten Dienstgüteklasse und einer Angabe eines Ortes der Drahtloskommunikationseinheit ein Zeitgeberschwellwert definiert wird.

12. Verfahren zum Reduzieren der Signalisierungslast in einem Drahtloskommunikationssystem (300) nach Anspruch 11, wobei der Schritt des Auswertens das Auswerten eines Algorithmusparameters aus einem Satz von Algorithmusparametern beinhaltet, so dass für jeden betreffenden Dienst in einer Dienstgüteklasse ein anderer Satz von Algorithmusparametern verwendet wird.

13. Kommunikationseinheit, die dazu eingerichtet ist, die Verfahrensschritte gemäß Anspruch 11 oder Anspruch 12 auszuführen.

14. Speichermedium, welches prozessorimplementierbare Befehle speichert, die dazu geeignet sind, einen Prozessor derart zu steuern, dass er die Verfahrensschritte gemäß Anspruch 11 ausführt.

**Revendications**

1. Elément d'infrastructure dans un système de communication sans fil UMTS (UMTS = Universal Mobile Telecommunications System) (100, 200) qui alloue des ressources de communication sans fil à une parmi plusieurs unités de communication sans fil (112 - 116) en fonction d'un état opérationnel de l'unité de communication sans fil, l'élément d'infrastructure comportant:

des moyens pour utiliser un modèle d'état de gestion de ressources radio pour déterminer au moins une transition de l'unité de communication sans fil entre plusieurs états opérationnels; et

des moyens pour faire passer l'unité de communication sans fil entre les plusieurs états opérationnels sur la base d'un seuil de temporisateur variable;

l'élément d'infrastructure étant **caractérisé en ce que**:

les moyens pour faire passer ladite unité de communication sans fil entre les plusieurs états opérationnels sont configurés à définir un seuil de temporisateur pour chaque combinaison d'une classe de qualité de service, le service dans la classe de qualité de service utilisé par l'unité de communication sans fil et une indication d'une position de l'unité de communications sans fil.

2. Elément d'infrastructure selon la revendication 1, l'élément d'infrastructure étant un radio network controller (136, 138, 140).

3. Elément d'infrastructure selon la revendication 1, la transition ou les transitions entre les plusieurs états opérationnels étant basée sur un parmi un jeu de paramètres d'algorithme de sorte qu'un jeu de paramètres d'algorithme différent est utilisé pour chaque classe de qualité de service respective et le service dans celle-ci.

4. Elément d'infrastructure selon la revendication 3, les paramètres d'algorithme incluant au moins un élément du groupe suivant: activité de l'usager, mobilité de l'usager, et un profile de trafique.

5. Elément d'infrastructure selon la revendication 1, la transition ou les transitions entre les plusieurs états opérationnels étant basée sur un parmi un jeu de temporisateurs variables de sorte qu'un temporisateur différent est utilisé pour chaque classe de qualité de service respective et le service dans celle-ci.

6. Elément d'infrastructure selon la revendication 5, ledit jeu de temporisateurs contenant un jeu de seuils de temporisateur variables pour chaque classe de qualité de service respective et le service dans celle-ci de sorte qu'un seuil de temporisateur différent est utilisé pour chaque classe de service de qualité respective et le service dans celle-ci.

7. Elément d'infrastructure selon la revendication 6, les niveaux de seuil de temporisateur étant basés sur une longueur d'un temps durant lequel l'unité de communication sans fil accède à un service dans une classe de qualité de service.

**8.** Elément d'infrastructure selon la revendication 2, le radio network controller (136, 138, 140) utilisant un élément du groupe suivant: le mécanisme de disposition de la gestion des ressources radio et des paramètres radio access bearer dans une demande d'allocation RANAP radio access bearer pour déterminer quel service est utilisé par l'unité de communication sans fil.

**9.** Système de communication comportant un élément d'infrastructure (136, 138, 140) selon l'une des revendications 1 à 8.

**10.** Elément d'infrastructure selon la revendication 9, l'élément d'infrastructure étant un radio network controller (136, 138, 140).

**11.** Procédé pour réduire une charge de signalisation dans un système de communication sans fil (300) comportant un élément d'infrastructure qui alloue des ressources sans fil à une parmi les plusieurs unités de communication sans fil (112 - 116) en fonction d'un état opérationnel de l'unité de communication sans fil, le procédé comportant les étapes suivantes:

quantifier (305) une fonction de coût pour un service particulier d'une classe de service de qualité utilisée par l'unité de communication sans fil afin de passer entre des états opérationnels d'unité de communication sans fil; évaluer (320, 350) une dérivée de fonction de coût pour identifier un paramètre d'algorithme, la fonction de coût étant dépendante d'un seuil de temporisateur variable; et faire passer l'unité de communication sans fil entre plusieurs états opérationnels sur la base de l'évaluation; le procédé étant **caractérise en ce que** l'étape d'évaluation d'une fonction de coût comprend l'opération de définir un seuil de temporisateur pour chaque combinaison d'une classe de qualité de service, le service dans la classe de qualité de service utilisé par l'unité de communication sans fil et une indication d'une position de l'unité de communication sans fil.

**12.** Procédé de réduire une charge de signalisation dans un système de communication sans fil (300) selon la revendication 11, l'étape d'évaluation comportant l'évaluation d'un paramètre d'algorithme parmi un jeu de paramètres d'algorithme de sorte qu'un jeu de paramètres différent est utilisé pour chaque service respectif dans une classe de qualité de service.

**13.** Unité de communication adapté pour effectuer les étapes procédurales de la revendication 11 ou 12.

**14.** Moyen de stockage stockant des instructions qui peuvent être implémentées par processeur et qui sont appropriées à piloter un processeur pour effectuer les étapes procédurales de la revendication 11.

FIG. 1

FIG. 2

*305*

QUANTIFY A COST FUNCTION FOR A PARTICULAR
SERVICE OR QUALITY OF SERVICE TO TRANSITION
BETWEEN UE OPERATIONAL STATES

*308*

SELECT WAY TO DETERMINE
ALGORITHM PARAMETER

*340*

SELECT ONE OR MORE VALUES
OF AN ALGORITHM PARAMETER   *310*

DETERMINE MATHEMATICAL
DESCRIPTION OF THE SYSTEM

*345*

PERTURB THE ONE OR MORE
VALUES TO DETERMINE WHETHER
COST FUNCTION CHANGES

SET THE COST FUNCTION
DERIVATIVE TO EQUAL ZERO

*315*

PERFORM MULTIPLE CONSECUTIVE
SIMULATIONS TO EVALUATE
COST FUNCTION   *320*

*350*

SOLVE COST FUNCTION
DERIVATIVE FOR VARIOUS
ALGORITHM PARAMETERS

CHANGE ALGORITHM PARAMETERS
DYNAMICALLY TO REDUCE
TOTAL COST FUNCTION

REPEAT PROCESS OVER TIME
TO ADDRESS CHANGES IN
SERVICE USAGE PROFILE

*325*        *355*   *360*   END

*300*   *FIG. 3*

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0076243 A